# EUROPÄISCHE PATENTSCHRIFT

(11) **EP 4 066 701 B1**
(45) Veröffentlichungstag und Bekanntmachung des Hinweises auf die Patenterteilung: **09.09.2026**
(21) Anmeldenummer: 22160408.5
(22) Anmeldetag: 07.03.2022
(51) Int. Cl.: A47J 31/60

(54) **KAFFEEAUTOMAT UND REINIGUNGSVORRICHTUNG**
COFFEE MACHINE AND CLEANING DEVICE
MACHINE À CAFÉ ET DISPOSITIF DE NETTOYAGE

(30) Priorität: 29.03.2021 DE 102021203146
(43) Veröffentlichungstag der Anmeldung: 05.10.2022
(73) Patentinhaber: BSH Hausgeräte GmbH, 81739 München (DE)
(72) Erfinder: Mies, Maximilian, 83253 Rimsting (DE); Quittek, Benno, 83278 Traunstein (DE); Steffl, Michael, 83250 Marquartstein (DE)

(56) Entgegenhaltungen:
- DE-A1- 102011 081 010
- DE-A1- 102016 115 229
- DE-A1- 102018 127 481
- US-A1- 2009 038 655

## Beschreibung

Die vorliegende Erfindung betrifft eine Reinigungsvorrichtung bzw. einen Kaffeeautomaten mit der Reinigungsvorrichtung, einem Gehäuseteil, einem Wassertank und einem Strömungsleitungssystem, wobei der Wassertank an einer Außenseite des Gehäuseteils entnehmbar angeordnet ist, wo auch ein Fluidanschluss für das Strömungsleitungssystem angeordnet ist, wogegen das Strömungsleitungssystem auf einer Innenseite des Gehäuseteils angeordnet ist.

Kaffeeautomaten mit einer Reinigungsvorrichtung sind bekannt, z. B. aus DE 10 2011 081 010 A1. Derartige Kaffeeautomaten weisen regelmäßig ein Gehäuseteil, einen Wassertank und einem Strömungsleitungssystem auf. Der Wassertank ist dabei an einer Außenseite des Gehäuseteils angeordnet und z. B. zum Befüllen entnehmbar. Unterhalb des Wassertanks befindet sich an der Außenseite des Gehäuseteils üblicherweise ein Fluidanschluss für ein Strömungsleitungssystem des Kaffeeautomaten. Das Strömungsleitungssystem ist aus Sicherheitsgründen für eine Bedienperson unzugänglich im Kaffeeautomaten und von der Bedienperson aus gesehen hinter dem Gehäuseteil, d. h. an einer Innenseite des Gehäuseteils, angeordnet.

Ein Kaffeeautomat mit einer Reinigungsvorrichtung ist auch aus der DE 10 2018 127481 A1 und der DE 10 2016 115229 A1 bekannt.

Die Reinigungsvorrichtung der bekannten Kaffeeautomaten ist einerseits notwendiger Weise an das Strömungsleitungssystem angekoppelt und muss andererseits für die Bedienperson zum Austausch von Reinigungskartuschen zugänglich sein. Daraus ergibt sich eine aufwändige Gehäusekonstruktion, z. B. mit seitlicher Kopplungsvorrichtung, durch die sich die bekannten Kaffeeautomaten mit Reinigungsvorrichtung in ihrem Aufbau erheblich von Kaffeeautomaten ohne Reinigungsvorrichtung unterscheiden. Daher ist auch ein Nachrüsten eines Kaffeeautomaten mit einer Reinigungsvorrichtung aufgrund der komplexen Gehäusekonstruktion nicht möglich oder zumindest nicht wirtschaftlich. Aufgabe der vorliegenden Erfindung ist es daher, einen Kaffeeautomaten und dessen Reinigungsvorrichtung weiter zu verbessern und insbesondere einen einfacheren und gleichermaßen nachhaltigeren oder flexibler einsetzbaren Aufbau anzugeben.

Diese Aufgabe wird durch einen Kaffeeautomaten mit den Merkmalen des Anspruchs 1 gelöst sowie auch durch eine Reinigungsvorrichtung mit den Merkmalen des Anspruchs 10. Vorteilhafte Weiterbildungen der Erfindung sind Gegenstand der abhängigen Ansprüche.

Ein erfindungsgemäßer Kaffeeautomat weist eine Reinigungsvorrichtung, ein Gehäuseteil, einen Wassertank und ein Strömungsleitungssystem auf, wobei der Wassertank an einer Außenseite des Gehäuseteils entnehmbar angeordnet ist. An der Außenseite des Gehäuseteils ist dabei ein Fluidanschluss für das Strömungsleitungssystem angeordnet und das Strömungsleitungssystem ist auf einer Innenseite des Gehäuseteils angeordnet. Erfindungsgemäß ist die Reinigungsvorrichtung an der Außenseite des Gehäuseteils zwischen dem Wassertank und dem Fluidanschluss anordenbar. Dadurch müssen am Kaffeeautomat außerhalb der Reinigungsvorrichtung nur sehr geringe Veränderungen gegenüber einem herkömmlichen Kaffeeautomaten vorgesehen sein. Dies ermöglicht eine Herstellung eines Kaffeeautomaten, der mit minimalem Aufwand um die Reinigungsvorrichtung erweitert werden kann. Dadurch kann eine Herstellung der Reinigungsvorrichtung nahezu unabhängig von der Herstellung des Kaffeeautomaten erfolgen. Es wird somit auf besonders wirtschaftliche Weise ermöglicht, den Kaffeeautomaten als Variante mit Reinigungsvorrichtung und als Variante ohne Reinigungsvorrichtung herzustellen und/oder die Reinigungsvorrichtung als Nachrüstlösung herzustellen. Dadurch kann sich auch eine Bedienperson nach dem Kauf des Kaffeeautomaten noch für die Zusatzfunktion der Reinigungsvorrichtung entscheiden und diese nachrüsten. Hierfür muss nur der herkömmliche Wassertank entfernt werden, an seiner Stelle die Reinigungsvorrichtung an der Außenseite des Gehäuseteils angeordnet werden und der Wassertank auf die Reinigungsvorrichtung aufgesetzt bzw. ein angepasster, ggf. kleinerer, Wassertank aufgesetzt werden. Daher ist der Begriff anordenbar hier so zu verstehen, dass sowohl der Kaffeeautomat, als auch die Reinigungsvorrichtung, je dazu eingerichtet ist bzw. sind, dass die Reinigungsvorrichtung an der Außenseite des Gehäuseteils zwischen dem Wassertank und dem Fluidanschluss angeordnet werden kann. Somit ermöglicht die erfindungsgemäß anordenbare Reinigungsvorrichtung auch eine Nachrüstung eines dazu eingerichteten Kaffeeautomaten durch die Bedienperson selbst, ohne spezielle Werkzeuge oder Fachkenntnisse und/oder eine nachhaltige Weiterverwendung der Reinigungsvorrichtung z. B. an einem neu erworbenen, dazu eingerichteten Kaffeeautomaten.

Unter einem Gehäuseteil ist dabei insbesondere jedes von einer Bedienperson bei einem bestimmungsgemäßen Gebrauch des Kaffeeautomaten erreichbare Bauteil zu verstehen, das verhindert, dass die Bedienperson dahinter angeordnete Teile erreichen kann, oder durch von diesen Teilen ausgehenden Gefahrenpotentialen wie z. B. Hitze oder elektrischer Spannung beeinflusst werden könnte. Bei einem z. B. durch eine Tür oder blende abgedeckten Vorrats- oder Entsorgebereich mit einem Wassertank ist demnach insbesondere eine nach innen gesehen hinten dem Wassertank angeordnete Struktur als Gehäuseteil anzusehen. Als Außenseite des Gehäuseteils ist demnach eine von der Bedienperson beim bestimmungsgemäßen Gebrauch des Kaffeeautomaten erreichbare Seite zu verstehen. Als Innenseite ist folglich eine von der Bedienperson beim bestimmungsgemäßen Gebrauch nicht erreichbare Seite zu verstehen.

Unter einem Wassertank ist insbesondere jeder Behälter zu verstehen, der zur zeitweisen Bevorratung von Flüssigkeit für eine Getränkebereitung geeignet und vorgesehen ist, was nicht ausschließt, dass er automatisch mit der Flüssigkeit befüllt wird.

Bei einer vorteilhaften Weiterbildung der erfindungsgemäßen Lösung umfasst die Reinigungsvorrichtung mindestens eine Fluidleitung. Dadurch wird einerseits ein besonders einfacher Aufbau der Reinigungsvorrichtung und andererseits ein besonders strömungsgünstiger Anschluss des Wassertanks und der Reinigungsvorrichtung an das Strömungsleitungssystem ermöglicht. Besonders vorteilhaft kann die Fluidleitung an ihrem oberen Ende wie der Fluidanschluss für das Strömungsleitungssystem ausgebildet sein und insbesondere an ihrem unteren Ende wie das Gegenstück zum Fluidanschluss am Wassertank, wodurch eine Montage der Reinigungsvorrichtung keine Anleitung erfordert.

Bei einer weiteren vorteilhaften Weiterbildung der erfindungsgemäßen Lösung umfasst die Reinigungsvorrichtung mindestens ein elektrisches Verbindungselement. Dadurch können auch bei einer nachgerüsteten Reinigungsvorrichtung Steuerungssignale und eine elektrische Versorgung von einer in jeder Ausführungsform optional vorhandenen Steuerungseinrichtung des Kaffeeautomaten zur Reinigungsvorrichtung und/oder Signale wie z. B. Sensorsignale von der Reinigungsvorrichtung zur Steuerungseinrichtung übertragen werden. Als elektrisches Verbindungselement ist insbesondere ein kontaktbasiert und daher robust arbeitendes Verbindungselement wie z. B. ein Stecker, ein Kabel oder ein Kabelstrang mit Stecker zu verstehen, vorteilhafter Weise ein abgedichteter Steckkontakt. Jedoch kann insbesondere auch ein kontaktlos und daher reinigungsfreundlich arbeitendes Verbindungselement wie z. B. eine Drahtlosschnittstelle, ein optisch oder magnetisch arbeitender Übertrager oder eine RFID-Basierte Übertragungseinrichtung ein elektrisches Verbindungselement im Rahmen der vorliegenden Erfindung darstellen.

In einer einfachsten Ausgestaltung kann die Reinigungsvorrichtung manuell und z. B. mechanisch durch die Bedienperson von einem Getränkebezugsmodus in einen Reinigungsmodus umgestellt werden. Dies ermöglicht einen sehr nachhaltigen und gleichermaßen kostengünstigen Aufbau, da es auch keinerlei elektrische Verbindungselemente erfordert, erhöht jedoch ggf. den Aufwand für die Handhabung.

Bei einer weiteren vorteilhaften Weiterbildung der erfindungsgemäßen Lösung umfasst die Reinigungsvorrichtung mindestens einen elektrisch betreibbaren Aktuator. Dadurch kann die Einleitung von Wasser aus dem Wassertank in die Reinigungsvorrichtung und/oder die Einleitung einer Reinigungslösung in das Strömungsleitungssystem und/oder den Wassertank vorteilhaft direkt und einfach gesteuert werden. Insbesondere kann der elektrisch betreibbare Aktuator ein Ventil sein, insbesondere ein besonders einfach erhältliches Mehrwegeventil oder ein besonders robustes Keramikventil. Für einen vorteilhaft großen Durchsatz an Reinigungslösung kann der Aktuator alternativ oder zusätzlich zu dem Ventil eine Pumpvorrichtung umfassen. Die Steuerung und/oder Energieversorgung kann insbesondere durch eines der vorgenannten Verbindungselemente vom Kaffeeautomat aus erfolgen.

Bei einer weiteren vorteilhaften Weiterbildung der erfindungsgemäßen Lösung umfasst die Reinigungsvorrichtung mindestens einen kontaktlos mechanisch betreibbaren, insbesondere magnetisch betreibbaren, Aktuator. Hierdurch können elektrische Verbindungselemente zwischen Kaffeeautomat und Reinigungsvorrichtung entfallen, was die Installation der Reinigungsvorrichtung weiter vereinfacht und die elektrische Sicherheit weiter erhöht.

Bei einer weiteren vorteilhaften Weiterbildung der erfindungsgemäßen Lösung umfasst die Reinigungsvorrichtung mindestens einen Vorratsbehälter für Reinigungsmittel.

Dadurch kann die Bedienperson auch bei einer nachgerüsteten Reinigungsvorrichtung den Komfort genießen, nicht bei jedem Reinigungszyklus manuell ein Reinigungsmittel zugeben zu müssen. Insbesondere kann dadurch auch bei einer einfach nachzurüstenden Reinigungsvorrichtung ein Reinigungszyklus automatisch durchgeführt werden, insbesondere ohne dass dafür eine Aktion der Bedienperson erforderlich ist.

Bei einer weiteren vorteilhaften Weiterbildung der erfindungsgemäßen Lösung ist der mindestens eine Vorratsbehälter entnehmbar, während der Wassertank an der Außenseite des Gehäuseteils angeordnet ist. Dadurch wird auch bei einer einfach nachzurüstenden Reinigungsvorrichtung ein besonders komfortabler Austausch des Vorratsbehälters, bzw. ein Entnehmen zum Nachfüllen, ermöglicht. Zwar erfordert dies eine aufwändigere Führungsgeometrie je Vorratsbehälter, z. B. in der Art einer Schublade. Jedoch kann der Vorratsbehälter dadurch auch bei eingesetztem Wassertank entnommen werden, z. B. während einem laufenden Kaffeebezug oder einem laufenden Reinigungszyklus. Somit ergibt sich ein hoher Bedienkomfort.

Bei einer weiteren vorteilhaften Weiterbildung der erfindungsgemäßen Lösung ist der mindestens eine Vorratsbehälter entnehmbar, während der Wassertank von der Außenseite des Gehäuseteils entnommen ist, insbesondere nur entnehmbar währen der der Wassertank entnommen ist. Dadurch wird, auch bei einer einfach nachzurüstenden Reinigungsvorrichtung, ein gleichermaßen besonders sicherer Austausch bzw. ein Entnehmen zum Nachfüllen, ermöglicht und eine besonders einfache Führungsgeometrie ermöglicht. Der Vorratsbehälter kann hierbei einfach von oben in eine entsprechende Aussparung eingesetzt werden, die keine zusätzliche Führungsgeometrie erfordern muss. Wenn der Wassertank abgenommen wird, sind bei gängigen Kaffeeautomaten auch alle laufenden Prozesse unterbrochen. Daher ist automatisch auch sichergestellt, dass der Vorratsbehälter nicht z. B. gerade befüllt wird, während die Bedienperson diesen entnehmen möchte. Dies ermöglicht es, die Sicherheit bei einer einfach nachzurüstenden Reinigungsvorrichtung auch ohne speziellen Eingriff in eine Steuerlogik des Kaffeeautomaten zu erhöhen.

Bei einer weiteren vorteilhaften Weiterbildung der erfindungsgemäßen Lösung enthält mindestens einer der Vorratsbehälter ein Entkalkungsmittel als Reinigungsmittel und mindestens einer der Vorratsbehälter ein Pflegemittel als Reinigungsmittel. Dadurch kann die Bedienperson auch bei einer nachgerüsteten Reinigungsvorrichtung den Komfort genießen, weder bei jedem Entkalkungszyklus ein Entkalkungsmittel zugeben zu müssen, noch bei jedem Pflegezyklus ein Pflegemittel zugeben zu müssen und insbesondere bei einem Kombinationszyklus beides. Insbesondere kann dadurch auch bei einer einfach nachzurüstenden Reinigungsvorrichtung die Entkalkung und Pflege vollautomatisch durchgeführt werden, insbesondere ohne dass dafür eine Aktion der Bedienperson erforderlich ist.

Unter einem Entkalkungsmittel ist dabei insbesondere jedes Mittel zu verstehen, das zu einem Vermindern von Kalkanhaftungen im Strömungsleitungssystem, insbesondere innerhalb einer Heizeinrichtung, beitragen kann. Es kann insbesondere in Pulverform, Tablettenform oder als Granulat vorliegen, oder aber Gasförmig sein. Unter einem Pflegemittel ist dabei insbesondere jedes Mittel zu verstehen, das zu einem Vermindern von pflanzlichen, öligen oder fettigen Anhaftungen im Strömungsleitungssystem, insbesondere innerhalb einer Brüheinrichtung, beitragen kann, oder das schützend auf Teile des Strömungsleitungssystems einwirkt, z. B. auf Dichtungen oder metallische Bestandteile. Es kann insbesondere in Pulverform, Tablettenform oder als Granulat vorliegen, oder aber Gasförmig sein, in eine Matrix eingebettet sein und/oder eine gel- oder wachsartige Struktur aufweisen.

Die eingangs genannten Aufgabe wird auch durch eine Reinigungsvorrichtung gelöst, die zur Anordnung an einem Kaffeeautomaten, wie er in den vorhergehenden Absätzen beschrieben ist, eingerichtet ist. Dadurch wird ermöglicht, dass die Bedienperson auch lange nach dem Kauf eines Kaffeeautomaten diesen um die Reinigungsvorrichtung erweitern und den Komfort einer vollautomatisch durchgeführten Entkalkung und Pflege genießen kann. Somit ergibt sich eine weitere Verbesserung der Reinigungsvorrichtung, die sich insbesondere durch einen einfacheren Aufbau auszeichnet und gleichermaßen sehr flexibel einsetzbar ist. Insbesondere wird ein einfaches und nachhaltiges Nachrüsten der Reinigungsvorrichtung auf wirtschaftlich ansprechende Weise ermöglicht, da sich der Aufbau mit Reinigungsvorrichtung nur noch geringfügig vom grundlegenden Aufbau ohne die Reinigungsvorrichtung unterscheidet.

Weitere Vorteile und vorteilhafte Ausgestaltungen ergeben sich aus der im Folgenden in Verbindung mit den Figuren 1 bis 4 beschriebenen Ausführungsform. Es zeigen:
- Figur 1a: einen Kaffeeautomaten gemäß dem Stand der Technik in der Seitenansicht,
- Figuren 1b, 1c: den Kaffeeautomaten aus Figur 1a in der Vorderansicht mit eingesetztem Wassertank bzw. entnommenem Wassertank,
- Figur 2a: ein schematisch dargestelltes Ausführungsbeispiel eines erfindungsgemäßen Kaffeeautomaten mit Reinigungsvorrichtung in der Seitenansicht,
- Figuren 2b, 2c: den Kaffeeautomaten aus Figur 2a in der Vorderansicht mit eingesetztem Wassertank bzw. entnommenem Wassertank,
- Figur 3: den Kaffeeautomaten aus Figur 2c (Darstellung gegenüber Figur 2c vergrößert) und die damit verbindbare Reinigungsvorrichtung, und
- Figur 4: den Kaffeeautomaten und die Reinigungsvorrichtung aus Figur 2a in der Seitenansicht.

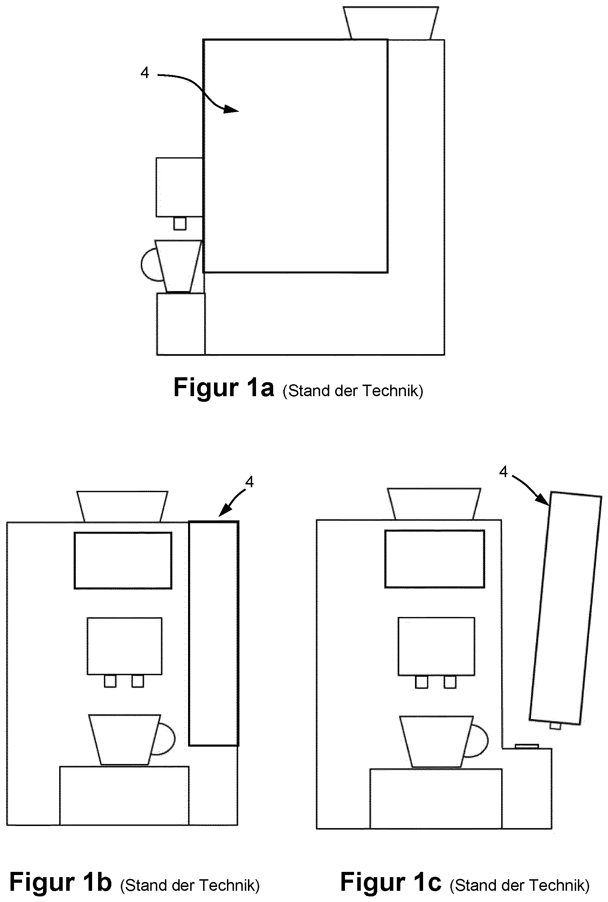

In Figur 1 ist ein aus dem Stand der Technik bekannter Kaffeeautomat dargestellt, wobei Figur 1a den Kaffeeautomaten in der Seitenansicht mit eingesetztem Wassertank 4 zeigt. In Figur 1b ist derselbe Kaffeeautomat in der Vorderansicht erkennbar, ebenfalls mit eingesetztem Wassertank 4. Hingegen ist in Figur 1c derselbe Kaffeeautomat in der Vorderansicht mit entnommenem Wassertank 4 dargestellt.

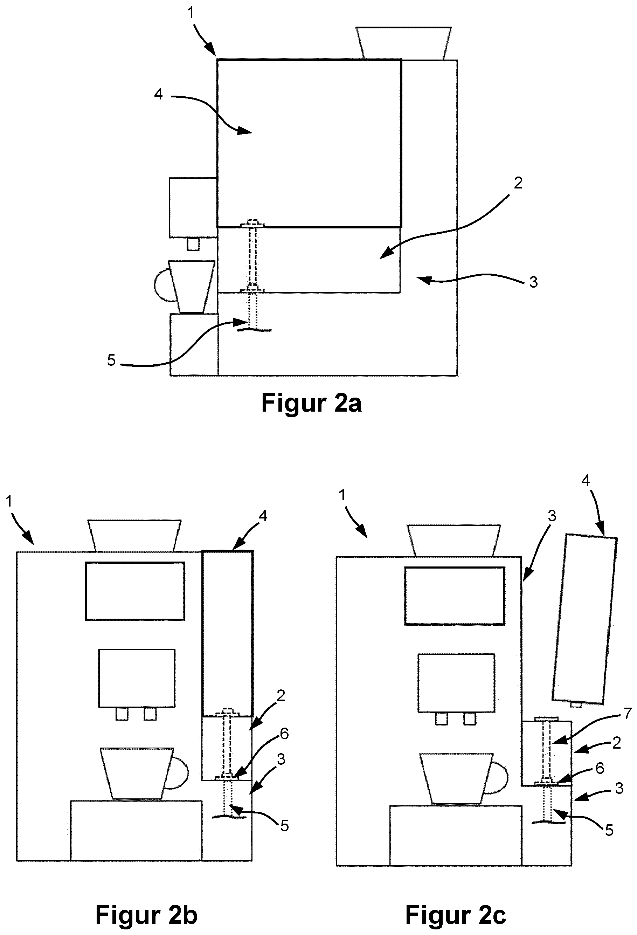

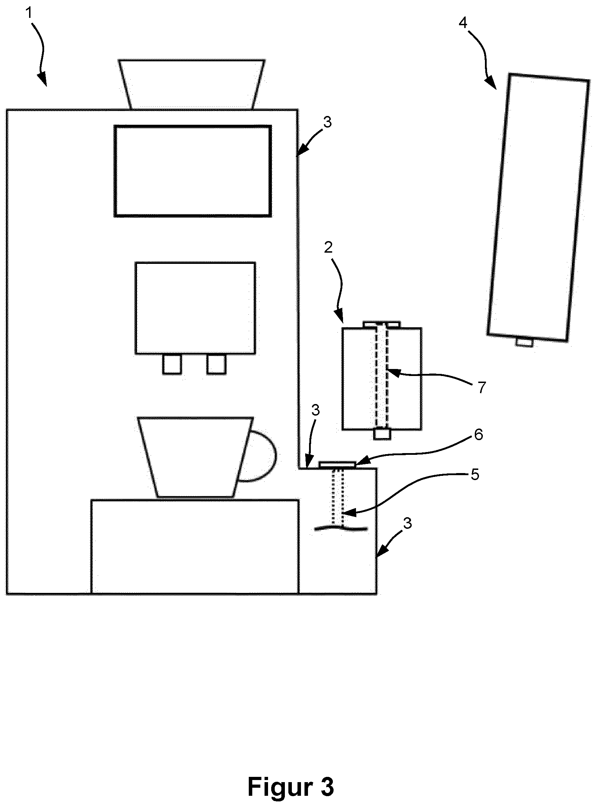

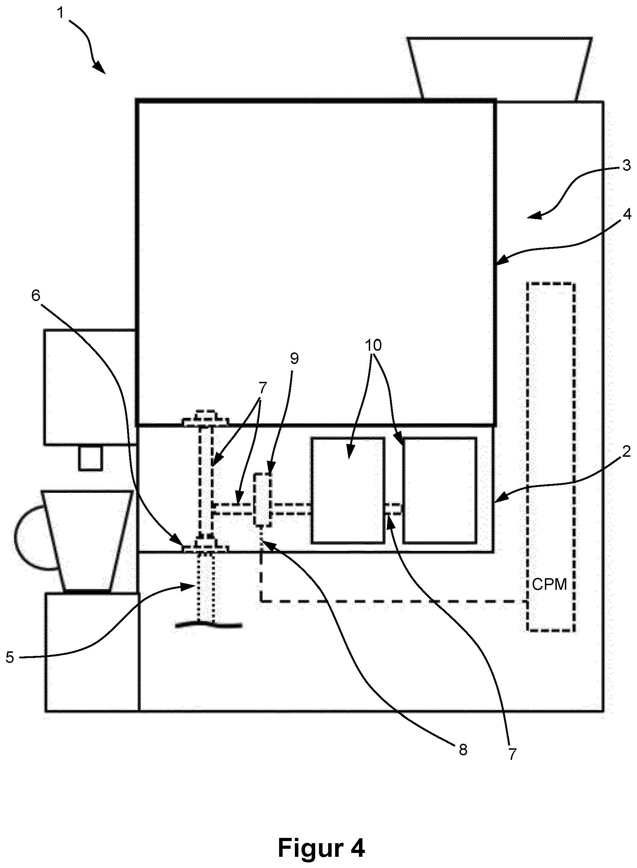

In den Figuren 2a bis 4 ist hingegen ein Ausführungsbeispiel eines erfindungsgemäßen Kaffeeautomaten 1 und einer dementsprechenden Reinigungsvorrichtung 2 schematisch dargestellt. Die Figuren 2a, 2b und 2c dienen insbesondere der Übersicht und die Details sind insbesondere in den Figuren 3 und 4 ersichtlich.

Figur 2a zeigt die Seitenansicht eines Kaffeeautomaten 1 mit einer Reinigungsvorrichtung 2, einem Gehäuseteil 3, einem Wassertank 4 und einem Strömungsleitungssystem 5. Von dem Strömungsleitungssystem 5 ist aus Gründen der einfacheren Darstellbarkeit in allen Figuren nur ein Anfangsbereich dargestellt. Es umfasst alle bei herkömmlichen Automaten, wie ihn Figur 1 zeigt, üblichen Komponenten wie z. B. eine Heizung, ein Mehrwegeventil, eine Brühkammer und einen Auslauf. Unter dem Auslauf ist zur leichteren Orientierung eine Tasse auf einem Tassenpodest angedeutet. Der Wassertank 4 ist an einer Außenseite des Gehäuseteils 3 entnehmbar angeordnet, was insbesondere im Vergleich mit Figur 2b und 2c deutlich wird, in welcher der Wassertank 4 eingesetzt bzw. entnommen dargestellt ist. An der Außenseite des Gehäuseteils 3 ist ein Fluidanschluss 6 für das Strömungsleitungssystem 5 angeordnet, besser erkennbar in Figur 3. An diesen Fluidanschluss 6 dockt bei den aus dem Stand der Technik bekannten Automaten ein komplementärer Anschlussstutzen des Wassertanks 4 beim Einsetzen an, vgl. Figur 1c. Das Strömungsleitungssystem 5 ist aus Sicherheitsgründen auf einer Innenseite des Gehäuseteils 3 angeordnet und dadurch für eine Bedienperson beim bestimmungsgemäßen Gebrauch nicht zu erreichen. Die Reinigungsvorrichtung 2 ist an der Außenseite des Gehäuseteils 3 zwischen dem Wassertank 4 und dem Fluidanschluss 6 angeordnet. Im dargestellten Beispiel ist das Gehäuseteil 3 eine gesamte rechte Seitenwand des Kaffeeautomaten 1.

Wie in Figur 2c erkennbar, ist der Wassertank 4 weiterhin entnehmbar, wobei die Reinigungsvorrichtung 2 beim Abnehmen des Wassertanks 4 weiterhin an der Außenseite des Gehäuseteils 3 verbleibt. Auch bei abgenommenem Wassertank 4 bleibt die Reinigungsvorrichtung 2 über eine integrierte Fluidleitung 7 mit dem Strömungsleitungssystem 5 verbunden. Die Reinigungsvorrichtung 2 ist für eine einfache werkzeuglose Montage durch eine nicht dargestellte, lösbare Rastverbindung am Gehäuseteil 3 gehalten, kann jedoch für eine besonders sichere Montage auch durch Schrauben, insbesondere durch Sicherheitsschrauben, befestigt sein, für eine erhöhte elektrische Sicherheit mit einem Klebstoff, insbesondere einem dichtenden Klebstoff, befestigt sein, oder für eine besonders hochwertig wirkende Ausführung magnetisch gehalten werden, sowie durch jegliche Kombination daraus.

Figur 3 zeigt den Kaffeeautomaten 1 in der Vorderansicht sowie die Reinigungsvorrichtung 2 und den Wassertank 4. Dabei ist die Reinigungsvorrichtung 2 nicht mit dem Kaffeeautomaten 1 verbunden. Figur 3 stellt dar, wie der Kaffeeautomat mit der Reinigungsvorrichtung 2 nachgerüstet werden kann. Dazu wird die Reinigungsvorrichtung 2 in einem nächsten, nicht in Figur 3 gezeigten Schritt mit dem Gehäuseteil 3 verbunden. Danach wird der Wassertank 4 aufgesetzt, der weniger hoch ist als der für eine Variante ohne Reinigungsvorrichtung 2 vorgesehene Wasserbehälter, was ein Vergleich der Figuren 1b und 2b zeigt. Dadurch wird die Reinigungsvorrichtung 2 an der Außenseite des Gehäuseteils 3 zwischen dem Wassertank 4 und dem Fluidanschluss 6 angeordnet.

Figur 4 zeigt den Kaffeeautomaten 1 mit der Reinigungsvorrichtung 2 an der Außenseite des Gehäuseteils 3 zwischen dem Wassertank 4 und dem Fluidanschluss 6. Zudem sind in Figur 4 weitere Details der Reinigungsvorrichtung 2 schematisch dargestellt. So ist erkennbar, dass die Reinigungsvorrichtung 2 ein elektrisches Verbindungselement 8 umfasst, das hier als abgedichteter Steckkontakt mit mehreren Kontaktstiften ausgebildet ist. Über das Verbindungselement 8 ist ein elektrisch betreibbarer Aktuator 9 der Reinigungsvorrichtung 2, der hier als Keramikventil ausgebildet ist, z. B. mit einer elektronischen Steuer- und Versorgungseinrichtung CPM des Kaffeeautomaten 1 verbunden, die im hinteren Teil des Kaffeeautomaten 1 angedeutet ist. Die Reinigungsvorrichtung 2 umfasst zwei Vorratsbehälter 10 für Reinigungsmittel, wobei einer der Vorratsbehälter 10 ein Entkalkungsmittel als Reinigungsmittel enthält und der zweite Vorratsbehälter 10 ein Pflegemittel als Reinigungsmittel enthält. Über den als Keramikventil ausgebildeten elektrisch betreibbaren Aktuator 9 und entsprechende Leitungsabzweige ist die Fluidleitung 7 mit dem ersten und/oder zweiten Vorratsbehälter 10 verbindbar. So kann gezielt Wasser aus dem Wassertank 4 in die Vorratsbehälter 10 und gelöstes Entkalkungsmittel bzw. Pflegemittel in den Wassertank 4 und/oder das Strömungsleitungssystem 5 des Kaffeeautomaten 1 geleitet werden.

Die Vorratsbehälter 10 sind in dem in Figur 4 dargestellten Beispiel entnehmbar, während der Wassertank 4 an der Außenseite des Gehäuseteils 3 angeordnet ist. Sie sind in der Art einer Schublade geführt und aus der Zeichnungsebene der Figur 4 heraus entnehmbar und über eine nicht dargestellte gedichtete Steckverbindung an die Leitungsabzweige der Fluidleitung 7 koppelbar. Daher sind die Vorratsbehälter 10 zu jeder Zeit und in jedem Betriebsstatus entnehmbar, z. B. um sie mit frischem Reinigungsmittel zu befüllen oder um sie auszutauschen.

In einer ersten nicht dargestellten Ausgestaltung ist der Aktuator 9 nicht elektrisch, sondern mechanisch betreibbar und als ein von der Bedienperson manuell zu verstellender Schieber ausgeführt. In einer zweiten nicht dargestellten Ausgestaltung ist der Aktuator 9 eine Pumpe und die Vorratsbehälter 10 nur dann entnehmbar, wenn der Wassertank 4 entnommen ist. In einer dritten nicht dargestellten Ausgestaltung ist der Aktuator 9 kontaktlos mechanisch betreibbar, da er magnetisch durch eine auf der Innenseite des Gehäuseteils 3 angeordnete Magneteinheit betrieben wird, wodurch kein elektrisches Verbindungselement 8 erforderlich ist.

Die in Figur 4 dargestellte Reinigungsvorrichtung 2 kann von einer Bedienperson vom Kaffeeautomat 1 abgenommen werden, um z. B. einen neu erworbenen Automaten besonders nachhaltig mit der Reinigungsvorrichtung 2 nachzurüsten. Auch dies wird ermöglicht, da die Reinigungsvorrichtung 2 wie in den vorhergehenden Absätzen beschrieben zur Anordnung an einem Kaffeeautomaten 1 eingerichtet ist. Dadurch wird auch ermöglicht, dass die Bedienperson lange nach dem Kauf des Kaffeeautomaten 1 diesen um die Reinigungsvorrichtung 2 erweitern und den Komfort einer vollautomatisch durchgeführten Entkalkung und Pflege genießen kann.

Somit ergibt sich eine weitere Verbesserung der Reinigungsvorrichtung 2, die sich insbesondere durch einen einfacheren Aufbau auszeichnet und gleichermaßen sehr flexibel einsetzbar ist. Insbesondere wird ein einfaches Nachrüsten der Reinigungsvorrichtung 2 auf nachhaltige und gleichermaßen wirtschaftlich ansprechende Weise ermöglicht.

Die im Ausführungsbeispiel dargestellten Bestandteile wie z. B. der Wassertank 4 und die Fluidleitung 7 sowie deren Größenverhältnisse zueinander sind grundsätzlich nicht als maßstabsgerecht anzusehen. Vielmehr können einzelne Elemente wie beispielsweise der Fluidanschluss 6 und das Gehäuseteil 3 zur besseren Darstellbarkeit und/oder zum besseren Verständnis übertrieben dick oder groß dimensioniert dargestellt sein. Die Erläuterung des erfindungsgemäßen Kaffeeautomaten 1 und der Reinigungsvorrichtung 2 anhand der beschriebenen Ausführungsbeispiele ist nicht als Beschränkung der Erfindung auf diese zu betrachten.

### BEZUGSZEICHENLISTE

- 1: Kaffeeautomat
- 2: Reinigungsvorrichtung
- 3: Gehäuseteil
- 4: Wassertank
- 5: Strömungsleitungssystem
- 6: Fluidanschluss
- 7: Fluidleitung
- 8: elektrisches Verbindungselement
- 9: Aktuator
- 10: Vorratsbehälter

## Patentansprüche

1. Kaffeeautomat (1) mit einer Reinigungsvorrichtung (2), einem Gehäuseteil (3), einem Wassertank (4) und einem Strömungsleitungssystem (5), wobei der Wassertank (4) an einer Außenseite des Gehäuseteils (3) entnehmbar angeordnet ist, wobei an der Außenseite des Gehäuseteils (3) ein Fluidanschluss (6) für das Strömungsleitungssystem (5) angeordnet ist, und wobei das Strömungsleitungssystem (5) auf einer Innenseite des Gehäuseteils (3) angeordnet ist, **dadurch gekennzeichnet, dass** sowohl der Kaffeeautomat (1), als auch die Reinigungsvorrichtung (2) dazu eingerichtet sind, dass die Reinigungsvorrichtung (2) an der Außenseite des Gehäuseteils (3) zwischen dem Wassertank (4) und dem Fluidanschluss (6) anordenbar ist.

2. Kaffeeautomat (1) nach Anspruch 1, **dadurch gekennzeichnet, dass** die Reinigungsvorrichtung (2) mindestens eine Fluidleitung (7) umfasst.

3. Kaffeeautomat (1) nach Anspruch 1 oder 2, **dadurch gekennzeichnet, dass** Reinigungsvorrichtung (2) mindestens ein elektrisches Verbindungselement (8) umfasst.

4. Kaffeeautomat (1) nach einem der Ansprüche 1 bis 3, **dadurch gekennzeichnet, dass** die Reinigungsvorrichtung (2) mindestens einen elektrisch betreibbaren Aktuator (9) umfasst.

5. Kaffeeautomat (1) nach einem der Ansprüche 1 bis 3, **dadurch gekennzeichnet, dass** die Reinigungsvorrichtung (2) mindestens einen kontaktlos mechanisch betreibbaren, insbesondere magnetisch betreibbaren, Aktuator (9) umfasst.

6. Kaffeeautomat (1) nach einem der Ansprüche 1 bis 5, **dadurch gekennzeichnet, dass** die Reinigungsvorrichtung (2) mindestens einen Vorratsbehälter (10) für Reinigungsmittel umfasst.

7. Kaffeeautomat (1) nach Anspruch 6, **dadurch gekennzeichnet, dass** der mindestens eine Vorratsbehälter (10) entnehmbar ist, während der Wassertank (4) an der Außenseite des Gehäuseteils (3) angeordnet ist.

8. Kaffeeautomat (1) nach Anspruch 6, **dadurch gekennzeichnet, dass** der mindestens eine Vorratsbehälter (10) entnehmbar ist, während der Wassertank (4) von der Außenseite des Gehäuseteils (3) entnommen ist, insbesondere nur entnehmbar ist währen der der Wassertank (4) entnommen ist.

9. Kaffeeautomat (1) nach einem der Ansprüche 6 bis 8, **dadurch gekennzeichnet, dass** mindestens einer der Vorratsbehälter (10) ein Entkalkungsmittel als Reinigungsmittel und mindestens einer der Vorratsbehälter (10) ein Pflegemittel als Reinigungsmittel enthält.

10. Die Reinigungsvorrichtung (2), eingerichtet zur Anordnung an einem Kaffeeautomaten (1) nach einem der Ansprüche 1 bis 9.

## Claims

1. Coffee machine (1) with a cleaning device (2), a housing part (3), a water tank (4) and a flow guiding system (5), wherein the water tank (4) is arranged on an outer face of the housing part (3) in a removable manner, wherein a fluid connection (6) for the flow guiding system (5) is arranged on the outer face of the housing part (3), and wherein the flow guiding system (5) is arranged on an inner face of the housing part (3), **characterised in that** both the coffee machine (1) and also the cleaning device (2) are designed so that the cleaning device (2) can be arranged on the outer face of the housing part (3) between the water tank (4) and the fluid connection (6).

2. Coffee machine (1) according to claim 1, **characterised in that** the cleaning device (2) comprises at least one fluid line (7).

3. Coffee machine (1) according to claim 1 or 2, **characterised in that** the cleaning device (2) comprises at least one electric connecting element (8).

4. Coffee machine (1) according to one of claims 1 to 3, **characterised in that** the cleaning device (2) comprises at least one electrically operable actuator (9).

5. Coffee machine (1) according to one of claims 1 to 3, **characterised in that** the cleaning device (2) comprises at least one actuator (9) which can be operated mechanically in a contactless manner, in particular can be operated magnetically.

6. Coffee machine (1) according to one of claims 1 to 5, **characterised in that** the cleaning device (2) comprises at least one storage container (10) for detergent.

7. Coffee machine (1) according to claim 6, **characterised in that** the at least one storage container (10) can be removed, while the water tank (4) is arranged on the outer face of the housing part (3).

8. Coffee machine (1) according to claim 6, **characterised in that** the at least one storage container (10) can be removed, while the water tank (4) is removed from the outer face of the housing part (3), in particular can only be removed while the water tank (4) is removed.

9. Coffee machine (1) according to one of claims 6 to 8, **characterised in that** at least one of the storage containers (10) contains a decalcifier as a detergent and at least one of the storage containers (10) contains a care product as a detergent.

10. The cleaning device (2), designed for arrangement on a coffee machine (1) according to one of claims 1 to 9.

## Revendications

1. Machine à café (1) comprenant un dispositif de nettoyage (2), un boîtier (3), un réservoir d'eau (4) et un système de conduits d'écoulement (5),
dans laquelle le réservoir d'eau (4) est monté de manière amovible sur un côté extérieur du boîtier (3),
dans laquelle un raccord de fluide (6) pour le système de conduits d'écoulement (5) est disposé sur le côté extérieur du boîtier (3), et
dans laquelle le système de conduits d'écoulement (5) est disposé sur un côté intérieur du boîtier (3),
**caractérisée en ce que** la machine à café (1) et le dispositif de nettoyage (2) sont configurés de sorte que le dispositif de nettoyage (2) peut être monté sur le côté extérieur du boîtier, entre le réservoir d'eau (4) et le raccord de fluide (6).

2. Machine à café (1) selon la revendication 1, **caractérisée en ce que** le dispositif de nettoyage (2) comprend au moins un conduit de fluide (7).

3. Machine à café (1) selon la revendication 1 ou 2, **caractérisée en ce que** le dispositif de nettoyage (2) comprend au moins un élément de connexion électrique (8).

4. Machine à café (1) selon l'une des revendications 1 à 3, **caractérisée en ce que** le dispositif de nettoyage (2) comprend au moins un actionneur (9) à entraînement électrique.

5. Machine à café (1) selon l'une des revendications 1 à 3, **caractérisée en ce que** le dispositif de nettoyage (2) comprend au moins un actionneur (9) à entraînement mécanique sans contact, notamment par un entraînement magnétique.

6. Machine à café (1) selon l'une des revendications 1 à 5, **caractérisée en ce que** le dispositif de nettoyage (2) comprend au moins un récipient de stockage (10) pour un produit de nettoyage.

7. Machine à café (1) selon la revendication 6, **caractérisée en ce que** l'au moins un récipient de stockage (10) peut être enlevé lorsque le réservoir d'eau (4) est disposé sur le côté extérieur du boîtier (3).

8. Machine à café (1) selon la revendication 6, **caractérisée en ce que** l'au moins un récipient de stockage (10) peut être enlevé lorsque le réservoir d'eau est retiré du côté extérieur du boîtier (3), notamment peut être enlevé uniquement lorsque le réservoir d'eau (4) est retiré.

9. Machine à café (1) selon l'une des revendications 6 à 8, **caractérisée en ce qu'**au moins l'un des récipients de stockage (10) comprend un agent de détartrage à titre de produit de nettoyage et au moins un des récipients de stockage (10) comprend un produit d'entretien à titre de produit de nettoyage.

10. Dispositif de nettoyage (2), adapté pour être placé sur une machine à café (1) selon l'une des revendications 1 à 9.
